# EUROPEAN PATENT SPECIFICATION

(11) **EP 3 779 614 B1**
(45) Date of publication and mention of the grant of the patent: **23.04.2025**
(21) Application number: 19785876.4
(22) Date of filing: 20.03.2019
(51) Int. Cl.: G05B 19/042

(54) **SAFETY CONTROL SYSTEM AND CONTROL METHOD IN SAFETY CONTROL SYSTEM**
SICHERHEITSKONTROLLSYSTEM UND KONTROLLVERFAHREN IN EINEM SICHERHEITSKONTROLLSYSTEM
SYSTÈME DE COMMANDE DE SÉCURITÉ ET PROCÉDÉ DE COMMANDE DANS UN SYSTÈME DE COMMANDE DE SÉCURITÉ

(30) Priority: 13.04.2018 JP 2018077410
(43) Date of publication of application: 17.02.2021
(73) Proprietor: Omron Corporation, Kyoto-shi, Kyoto 600-8530 (JP)
(72) Inventor: UEDA, Takamasa, Kyoto 619-0283 (JP)
(74) Representative: Becker, Eberhard
(86) International application number: PCT/JP2019/011876
(87) International publication number: WO 2019/198456

(56) References cited:
- EP-A1- 3 112 964
- EP-A1- 3 112 964
- JP-A- 2008 310 536
- JP-A- 2013 161 106
- JP-A- 2017 103 677
- US-A1- 2004 230 323
- US-A1- 2013 261 772
- US-A1- 2015 287 318
- US-A1- 2017 214 717

## Description

### [Technical Field]

The present invention relates to a safety control system that realizes functional safety and a control method in the safety control system.

### [Background Art]

In order to safely use equipment or machinery that is used in various manufacturing sites, functional safety must be realized according to international standards such as IEC 61508. Such functional safety may be realized by a safety program being executed in a safety control device. For example, Japanese Patent Laid-Open No. 2005-031778 (Patent Literature 1) discloses a safety controller that gives a safety output to a safety output control target on the basis of an input from an input device and controls an operation of mechanical equipment.
US 2015/287318 A1 discloses an industrial-enabled mobile electronic device which can communicate with an industrial device to read and write configuration settings, read and view log data, send commands to the industrial device, and other such functions. The mobile electronic device can perform various types of analysis on images and video of the industrial device captured by the mobile electronic device.
US 2004/230323 A1 discloses an apparatus, system and process for communicating safety-related data, over an open system, from a sender to a receiver. Safety-related components, including function blocks, flexible function blocks, resource blocks and transducer blocks, as well as, safety-related objects are provided.
US 2017/214717 A1 discloses a model-based industrial security policy configuration system implementing a plant-wide industrial asset security policy in accordance with security policy definitions provided by a user. The configuration system models the collection of industrial assets for which diverse security policies are to be implemented. An interface allows the user to define security policies for a plant environment.
US 2013/261772 A1 discloses a method and apparatus for parameterizing a device with parameters from a parameter list, wherein in an event of a match occurring between an external parameter token calculated externally based on the parameter list, and an internal parameter token calculated internally by the device to be parameterized based on the parameter list, an external device token input into the device is compared with an internal device token.
EP 3112964 A1 discloses a system and a method for safety relevant input to a control system, the control system including a PLC which includes a non-safety control module for controlling non-safety processes, and a safety control module for controlling functional safety of processes, the system further including an operator panel for user selection of safety-related object input, wherein the system includes two communication paths.

### [Citation List]

### [Patent Literature]

[Patent Literature 1]
Japanese Patent Laid-Open No. 2005-031778

### [Summary of Invention]

### [Technical Problem]

With the progress of information and communication technology (ICT) in recent years, for example, a mode of remotely operating factory equipment from a control center disposed in a remote place has been put into practical use. For such control from the remote place, control for a safety control device is also assumed.

In order to realize such a remote operation with respect to the safety control device, it is necessary to maintain the security of operation commands that are exchanged.

An objective of the present invention is to solve the problems as described above, and the present invention provides a safety control system capable of ensuring the security of operation commands issued from an external device.

### [Solution to Problem]

The present invention is provided by the appended claims. The following disclosure serves a better understanding of the present invention. A safety control system for realizing functional safety according to an example of the present disclosure includes a computation processing unit that executes a safety program; and an access management unit that updates a stored variable in response to an access from an external device. The computation processing unit starts execution of the safety program when a specific variable is updated to a predefined value by the access management unit. The access management unit receives a variable-updating command through secure communication from the external device.

According to the present disclosure, for example, it is possible to instruct the safety control system to start execution of the safety program while maintaining security from an operation terminal disposed at a remote place, or the like. Thus, it is possible to achieve labor saving and wiring saving while maintaining security.

According to the invention, the safety control system includes a standard control unit mainly responsible for standard control and a safety control unit mainly responsible for safety control. The computation processing unit is provided in the safety control unit, and the access management unit is provided in the standard control unit.

According to the present disclosure, it is possible to realize a system without the standard control and the safety control affecting each other and with the standard control and the safety control being integrated.

According to the invention, the update of the variables is reflected between the standard control unit and the safety control unit via a local bus.

According to the present disclosure, it is possible to realize data exchange between the standard control unit and the safety control unit via a local bus of which the security is maintained.

According to the invention, the safety control system further includes an attribute setting receiving unit that receives a setting of one or a plurality of attributes for variables managed by the safety control system. The one or plurality of attributes include a setting of validity/invalidity of security.

According to the present disclosure, it is possible to use variables of which the security is guaranteed in any program that is executed in the safety control system, by setting the attribute of validity/invalidity of the security in advance.

According to the invention, the access management unit uses secure communication for exchange of a command for updating a value of the variable of which the security is set to validity.

According to the present disclosure, it is possible to realize secure communication without an awareness of a user, simply by setting the security to validity.

A control method in a safety control system for realizing functional safety according to another example of the present disclosure includes receiving a command for updating a variable value through secure communication from an external device; updating a stored variable in response to the command from the external device; and starting execution of a safety program when a specific variable is updated to a predefined value.

According to the present disclosure, for example, it is possible to instruct the safety control system to start execution of the safety program while maintaining security from an operation terminal disposed at a remote place, or the like. Thus, it is possible to achieve labor saving and wiring saving while maintaining security.

### [Advantageous Effects of Invention]

According to the present invention, the security of the operation command issued from the external device can be secured.

### [Brief Description of Drawings]

FIG. 1 is a schematic diagram illustrating a configuration example of a safety control system according to the present embodiment.
FIG. 2 is a schematic diagram illustrating an example of a user interface screen provided in a remote control device of the safety control system according to the present embodiment.
FIG. 3 is a schematic diagram illustrating data processing in the control device according to the present embodiment.
FIG. 4 is a schematic diagram illustrating a hardware configuration example of a standard control unit constituting the control device according to the present embodiment.
FIG. 5 is a schematic diagram illustrating a hardware configuration example of a safety control unit constituting the control device according to the present embodiment.
FIG. 6 is a schematic diagram illustrating a hardware configuration example of a safety IO unit constituting the control device according to the present embodiment.
FIG. 7 is a schematic diagram illustrating a hardware configuration example of a communication coupler unit constituting the control device according to the present embodiment.
FIG. 8 is a sequence diagram illustrating an example of data transfer in the safety control system according to the present embodiment.
FIG. 9 illustrates a user interface screen defining variables that can be used in the safety control unit according to the present embodiment.
FIG. 10 illustrates a user interface screen defining variables that can be used in the standard control unit according to the present embodiment.

### [Description of Embodiments]

Embodiments of the present invention will be described in detail with reference to the drawings. The same or corresponding units in the drawings are denoted by the same reference signs and description thereof will not be repeated.

### <A. Example of application>

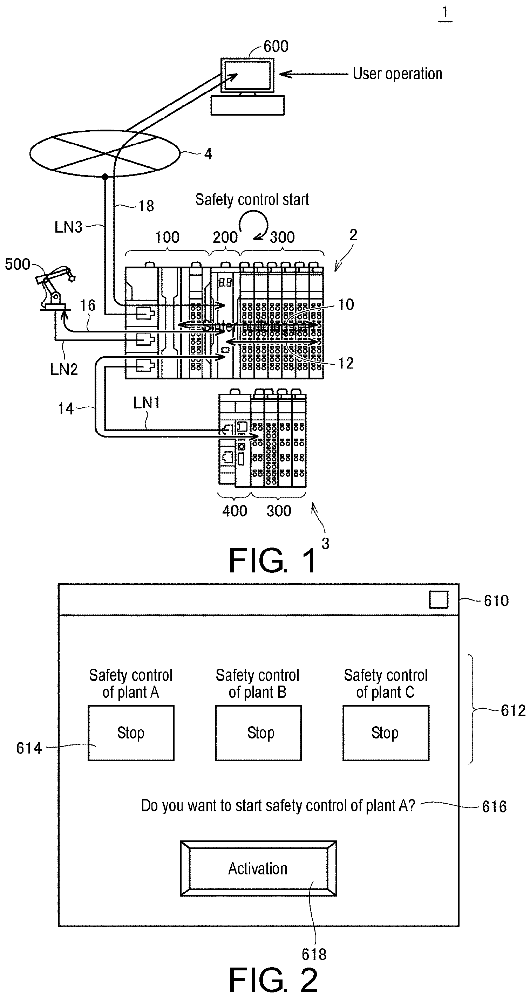

First, an example of a scene to which the present invention is applied will be described. FIG. 1 is a schematic diagram illustrating a configuration example of a safety control system 1 according to the present embodiment. The safety control system 1 is a system for realizing functional safety.

FIG. 1 illustrates the safety control system 1 centered on a control device 2 as an example. The control device 2 can execute standard control and safety control.

In the present specification, the "standard control" is typically a general term for processes for controlling a control target, according to predetermined required specifications. On the other hand, the "safety control" is a generic term for processes for preventing human safety from being threatened by some facility or machine due to some malfunction. The safety control realizes functional safety defined in IEC 61508, for example. More specifically, the safety control includes a process of stopping the control target not only when a behavior of the control target itself differs from an original behavior, but also when a determination is made that any abnormality has occurred in the control device 2 itself.

Although both the standard control and the safety control may be realized by the same unit, an example of a configuration in which a standard control unit 100 mainly responsible for standard control and a safety control unit 200 mainly responsible for safety control are used is shown in the safety control system 1.

That is, the control device 2 includes the standard control unit 100 and the safety control unit 200. The safety control unit 200 is connected to the standard control unit 100 via a local bus 10 as a kind of local unit.

In the present specification, the "local unit" is a generic term for any unit connected via the local bus 10.

The control device 2 further includes one or a plurality of safety IO units 300. The safety IO unit 300 is responsible for the input of signals from a safety component and/or the output of signals to the safety component. In the present specification, the "safety component" mainly includes any device that is used for safety control, and includes, for example, a safety relay or various safety sensors.

The safety control unit 200 exchanges safety IO data with one or a plurality of safety IO units 300 via the local bus 10. In the present specification, "IO data" includes input data acquired from a control target or the safety component and/or output data output to a control device or the safety component. Among the "IO data", particularly, safety input and output data that is used for safety control is called "safety IO data".

The control device 2 is further connected to a remote IO device 3 via a wiring LN1. Normally, the remote IO device 3 is disposed at a position different from that of the control device 2, exchanges a signal with a control target or a safety component, and exchanges IO data corresponding to the exchange of the signal with the standard control unit 100.

More specifically, the remote IO device 3 includes a communication coupler unit 400 and one or a plurality of safety IO units 300. The safety IO unit 300 is connected to the communication coupler unit 400 via a local bus (not illustrated) as a kind of local unit.

Further, the control device 2 is also network-connected to the robot 500 including the safety component via a wiring LN2.

In the safety control system 1 according to the present embodiment, the safety control unit 200 can establish one or a plurality of independent connections with other control units and/or the communication coupler unit 400. In each connection, the safety IO data can be exchanged at predetermined intervals.

For example, when an attention is paid to the safety control unit 200 of the control device 2, (1) a first connection 12 established with one or a plurality of safety IO units 300 connected via the local bus 10 of the control device 2, (2) a second connection 14 established between the control device 2 and the remote IO device 3 connected via the wiring LN1, and (3) a third connection 16 established between the control device 2 and the robot 500 connected via the wiring LN2 are managed.

In the local bus 10, data transfer according to a communication protocol specific to a manufacturer of the control device 2 may be used. For example, when a transfer in a form in which process data is sequentially transferred in a predetermined cycle is adopted as a manufacturer-specific communication protocol, the exchange of the safety IO data between the connections can be realized by inserting a message frame called a Safety over EtherCAT (FSoE) frame into the process data.

Further, in the wiring LN1 between the control device 2 and the remote IO device 3, data transfer according to a standardized communication protocol such as EtherCAT (registered trademark) may be used. When the data transfer according to EtherCAT is adopted, the exchange of the safety IO data between the connections can be realized by inserting an FSoE frame (a message frame) into process data sequentially transferred according to EtherCAT.

Further, in the wiring LN2 between the control device 2 and the robot 500, data transfer according to an industrial communication protocol is performed. Examples of such an industrial communication protocol include EtherNet/IP, DeviceNet, CompoNet, and ControlNet. In the present embodiment, it is assumed that data transfer according to EtherNet/IP is adopted as a typical example. Using such a data transfer communication protocol, a communication protocol such as common industrial protocol (CIP) or CIP Safety is implemented as an application layer.

As a typical example, a configuration in which the safety IO data is exchanged between the safety control unit 200 of the control device 2 and the robot 500 according to CIP safety implemented using EtherNet/IP is shown. EtherNet/IP is an Ethernet (registered trademark)-based communication protocol. CIP Safety is a communication protocol based on CIP and compatible with functional safety standards such as IEC 61508.

As described above, in the safety control system 1 according to the present embodiment, the safety control unit 200 of the control device 2 holds a plurality of independent connections, and independent safety control for each connection and/or safety control in which a plurality of connections are linked can be realized by using the safety IO data exchanged by each connection.

Further, in the safety control system 1 according to the present embodiment, the control device 2 is network-connected to a wide area network 4 via a wiring LN3, and can perform data communication with the remote control device 600 via the wide area network 4. The remote control device 600 corresponds to an operation terminal that receives a remote operation with respect to the control device 2.

As a typical usage pattern, when the remote control device 600 receives the user operation, content of the user operation is transferred to the control device 2 via the wide area network 4. In the control device 2, the safety control is activated in response to the transferred content of the user operation.

FIG. 2 is a schematic diagram illustrating an example of a user interface screen 610 provided in the remote control device 600 of safety control system 1 according to the present embodiment. Referring to FIG. 2, the user interface screen 610 includes a situation display object 612 indicating an execution situation of safety control for each safety control unit 200 that is a control target. For example, when the user selects one display object 614 corresponding to the safety control of which the execution stops in the situation display object 612, a message 616 such as "Do you want to start safety control of plant A?" and a button object 618 for activating the target security control are displayed.

When the user selects the button object 618, an activation command is transferred to the safety control unit 200 responsible for the target safety control. In the safety control unit 200 that receives the activation command, execution of the safety control is started.

In the safety control system 1 according to the present embodiment, it is possible to maintain security of any data including operation commands that are exchanged between the remote control device 600 and the control device 2.

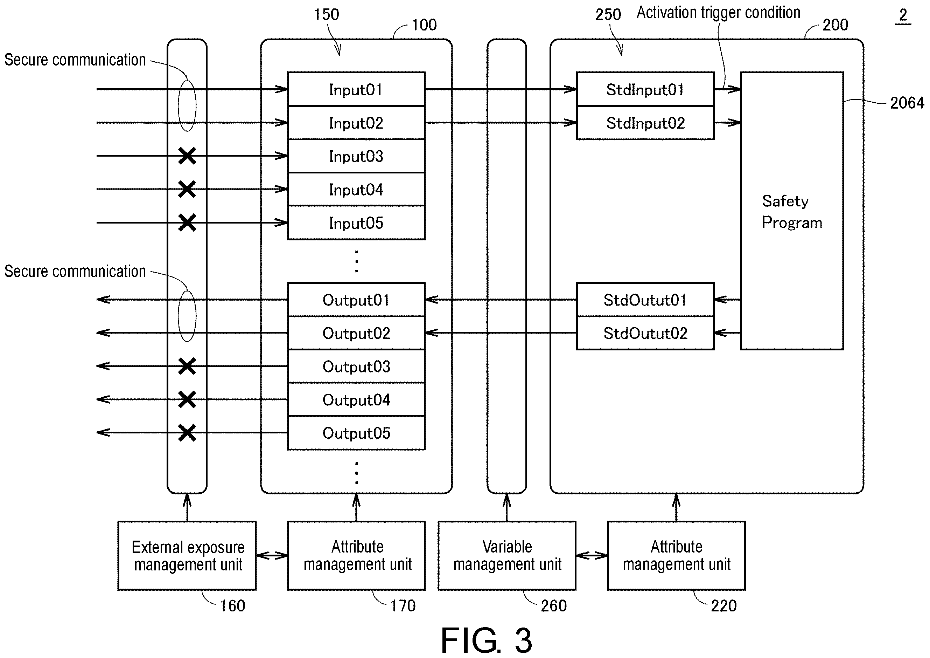

FIG. 3 is a schematic diagram illustrating data processing in the control device 2 according to the present embodiment. Referring to FIG. 3, the control device 2 includes the standard control unit 100 and the safety control unit 200. Both of the units are connected via the local bus 10 so that data communication is possible.

The standard control unit 100 has an input and output data area 150 that can be accessed when a standard control program is executed. The input and output data area 150 stores one or a plurality of pieces of input data and one or a plurality of pieces of output data. The input data includes measurement values acquired from various sensors (which may include both general sensors and safety sensors), any values acquired from various devices, values input by the user, and the like. The output data includes a result computed by executing the standard control program and/or the safety program 2064.

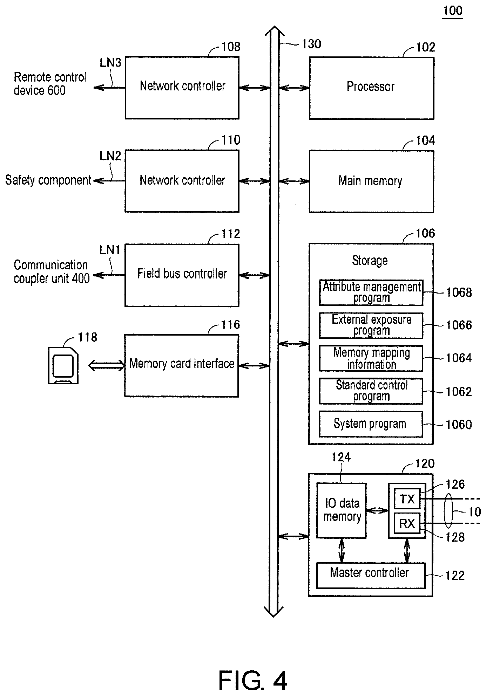

The safety control unit 200 has an input and output data area 150 that can be accessed when the safety program 2064 is executed. The input and output data area 150 stores one or a plurality of pieces of input data and one or a plurality of pieces of output data updated via the standard control unit 100. For the input and output data used in the safety control unit 200, variable association and data update are executed by the variable management unit 260. The variable management unit 260 is provided by a variable management program 2066 (see FIG. 5) that is executed by the safety control unit 200. However, the present invention is not limited thereto and the variable management unit 260 may be provided by a system program 2060 (see FIG. 5) and/or a system program 1060 (see FIG. 4) that is executed by the standard control unit 100.

In the example illustrated in FIG. 3, variables "Input01" and "Input02" corresponding to input data of the standard control unit 100 are associated with "StdInput01" and "StdInput02" of the safety control unit 200, respectively. Further, variables "Output01" and "Output02" corresponding to output data of the standard control unit 100 are associated with "StdOutput01" and "StdOutput02" of the safety control unit 200, respectively.

In the present embodiment, the standard control unit 100 has a function of receiving an access from an external device such as the remote control device 600. Such a function of receiving the access from the external device is provided by the external exposure management unit 160. The external exposure management unit 160 corresponds to an access management unit that updates a stored variable in response to an access from an external device. In the following description, receiving the access from the external device is also referred to as "external exposure".

The external exposure by the external exposure management unit 160 can be realized using any protocol and architecture. In an industrial network, for example, a multi-layer architecture such as an OPC unified architecture (UA) can be used. By adopting OPCUA, it is possible to transfer, exchange, and update any data even between devices having different communication protocols. In the present embodiment, it is assumed that OPCUA is adopted as a typical example.

Further, in the control device 2 according to the present embodiment, it is possible to impart any attribute to various types of data (or any variables) that can be used in the standard control unit 100 and the safety control unit 200. Such attribute impartment is realized by the attribute management units 170 and 270.

The attributes given by the attribute management units 170 and 270 can be arbitrarily determined, but in the present embodiment, at least security is included as an attribute. Input and output data (or variables) to which the attribute that the security is valid is imparted by the attribute management unit 170 or the attribute management unit 270 is treated as secure data in the standard control unit 100 and the safety control unit 200.

Further, among the input and output data (or variables) to which the attribute that the security is valid is imparted, the security of the data that is exposed to the outside can be maintained even when the data is accessed from an external device. That is, even when a value of the input data stored in the input and output data area 150 is updated by the access from the external device, a command for updating the value, or the like is transferred through secure communication. More specifically, the external exposure management unit 160 corresponding to the access management unit receives a variable-updating command from an external device through secure communication.

Access (pull or push) to a value of the output data stored in the input and output data area 150 is also provided through secure communication.

As the secure communication, a protocol for ensuring any security implemented in OPC UA may be used. Alternatively, data to be transferred may be encrypted using any method, or an electronic signature or the like may be imparted using any method. Further, alternatively, any authentication method such as a password may be used before the data transfer. Further, alternatively, a general-purpose protocol such as secure sockets layer/transport layer security (SSL/TLS) may be used.

Thus, the security of the data exchanged between the control device 2 and the external device can be ensured by using any method, scheme, and architecture.

The standard control unit 100 and the safety control unit 200 can use input and output data or variables of which the security has been ensured using the method as described above.

Using the input data of which the security is ensured, including such an access from the external device, as a safety control activation condition allows the security to be ensured for a safety control activation operation.

More specifically, a value indicating an operation command for activating remote control is input via a data transfer path 18 between the remote control device 600 and the standard control unit 100. A value of the variable in the standard control unit 100 is updated by this operation command. The value of the variable managed by the standard control unit 100 is reflected in the value of the corresponding variable in the safety control unit 200 via the local bus 10. Finally, in the safety control unit 200, the safety control is activated using the value of the variable as the activation condition. Computation of safety output data is started through the activation of the safety control and a corresponding safety output signal is validated, thereby providing functional safety.

Thus, the safety control unit 200 starts the execution of the safety program 2064 when a specific variable is updated to a predefined value by the external exposure management unit 160. That is, in the present embodiment, activation of safety control can be instructed via secure communication, such that the safety of the operation command imparted from the external device to the safety control device can be ensured.

Hereinafter, a more specific configuration and process for realizing the present embodiment will be described.

### <B. Hardware configuration example>

Next, a hardware configuration example of a main device constituting the safety control system 1 according to the present embodiment will be described.

### (b1: Standard control unit 100)

FIG. 4 is a schematic diagram illustrating a hardware configuration example of the standard control unit 100 constituting the control device 2 according to the present embodiment. Referring to FIG. 4, the standard control unit 100 includes a processor 102, a main memory 104, a storage 106, network controllers 108 and 110, a fieldbus controller 112, a memory card interface 116, and a local bus controller 120. These components are connected via a processor bus 130.

The processor 102 corresponds to a computation processing unit that executes a control computation or the like, and includes a central processing unit (CPU), a graphics processing unit (GPU), or the like. Specifically, the processor 102 reads a program (for example, the system program 1060 and a standard control program 1062) stored in the storage 106, loads the program into the main memory 104, and executes the program, thereby realizing control according to a control target and various processes as will be described below.

The main memory 104 includes, for example, a volatile storage device such as a dynamic random access memory (DRAM) or a static random access memory (SRAM). The storage 106 includes, for example, a nonvolatile storage device such as a hard disk drive (HDD) or a solid state drive (SSD).

In the storage 106, the standard control program 1062 created according to a control target such as equipment or a machine is stored, in addition to the system program 1060 for realizing basic functions. Further, the storage 106 stores memory mapping information 1064 for relaying data transfer using the network controllers 108 and 110 and/or the fieldbus controller 112, in the safety control unit 200.

The storage 106 further stores an external exposure program 1066 for realizing the external exposure management unit 160 (FIG. 3) and an attribute management program 1068 for realizing the attribute management unit 170 (FIG. 3).

The network controllers 108 and 110 exchange data frames with another control device, any device, and another information processing device via any industrial network. Although a configuration in which the two network controllers 108 and 110 are included is illustrated in FIG. 4, a configuration in which a single network controller is included may be adopted.

The fieldbus controller 112 exchanges data frames with a remote device via any fieldbus. Although a configuration in which the single fieldbus controller 112 is included is illustrated in FIG. 4, a configuration in which a plurality of fieldbus controllers is included may be adopted.

A memory card 118 that is an example of a recording medium can be attached to or detached from the memory card interface 116. The memory card interface 116 can write any data to the memory card 118 and read any data from the memory card 118.

The local bus controller 120 exchanges data frames with the safety control unit 200 or any safety IO unit 300 via the local bus 10. More specifically, the local bus controller 120 includes a master controller 122, an IO data memory 124, a transmission circuit (TX) 126, and a reception circuit (RX) 128.

The IO data memory 124 is a memory that temporarily stores IO data that is exchanged with any local unit via the local bus 10, and an address is defined in advance in association with each local unit. The transmission circuit 126 generates a communication frame including output data and sends the communication frame to the local bus 10. The reception circuit 128 receives a communication frame transferred on the local bus 10 and demodulates the communication frame into input data. The master controller 122 controls the IO data memory 124, the transmission circuit 126, and the reception circuit 128 according to, for example, a data transfer timing on the local bus 10. The master controller 122 provides control of a communication master that manages, for example, data transfer on the local bus 10.

Although a configuration example in which necessary functions are provided by the processor 102 executing the program is illustrated in FIG. 4, some or all of the provided functions may be implemented using a dedicated hardware circuit (for example, an application specific integrated circuit (ASIC) or a field-programmable gate array (FPGA). Alternatively, a main part of the standard control unit 100 may be realized by using hardware according to a general-purpose architecture (for example, an industrial personal computer based on a general-purpose personal computer). In this case, a plurality of operating systems (OSs) having different purposes may be executed in parallel using a virtualization technique and necessary applications may be executed on each OS. Further, a configuration in which functions of a display device, a support device, or the like are integrated in the standard control unit 100 may be adopted.

For example, when the support device is directly connected to the standard control unit 100, a universal serial bus (USB) port and a USB controller for exchanging data with the support device may be further provided.

### (b2: Safety control unit 200)

FIG. 5 is a schematic diagram illustrating a hardware configuration example of the safety control unit 200 constituting the control device 2 according to the present embodiment. Referring to FIG. 5, safety control unit 200 includes a processor 202, a main memory 204, a storage 206, and a local bus controller 220. These components are connected via a processor bus 230.

The processor 202 corresponds to a computation processing unit that executes the safety program 2064.

The local bus controller 220 functions as a communication slave and provides the same communication interface as those of other local units. That is, the local bus controller 220 exchanges data frames with the standard control unit 100 and the local unit via the local bus 10.

On the local bus 10, the safety control unit 200 and the safety IO unit 300 are connected in a daisy chain. When a communication frame addressed to its own unit is input from a device present upstream on the local bus 10, the local bus controller 220 receives the input communication frame. Similarly, when a communication frame addressed to its own unit is input from a device present downstream on the local bus 10, the local bus controller 220 receives the input communication frame. When a communication frame other than the communication frame addressed to its own unit is input, the communication frame passes through the local bus controller 220 as it is. Such reception or passage of the communication frame allows data transfer between nodes of the standard control unit 100 and the local unit/the safety control unit 200 to be realized.

More specifically, the local bus controller 220 includes a slave controller 222, a buffer memory 224, transmission circuits (TX) 225 and 226, and reception circuits (RX) 227 and 228.

The buffer memory 224 temporarily stores a communication frame that is transferred on the local bus 10.

When the reception circuit 227 receives communication frames transferred on the local bus 10, the reception circuit 227 stores all or some of the communication frames in the buffer memory 224. The transmission circuit 226 sends the communication frame received by the reception circuit 227 to the local bus 10 on the downstream side.

Similarly, when the reception circuit 228 receives communication frames transferred on the local bus 10, the reception circuit 228 stores all or some of the communication frames in the buffer memory 224. The transmission circuit 225 sends the communication frame received by the reception circuit 128 to the local bus 10 on the downstream side.

The slave controller 222 controls the transmission circuits 225 and 226, the reception circuits 227 and 228, and the buffer memory 224 in order to realize sequential transfer of communication frames on the local bus 10.

The processor 202 corresponds to a computation processing unit that executes control computation or the like, and includes a CPU, a GPU, and the like. Specifically, the processor 202 reads programs (for example, the system program 2060, a communication processing program 2062, and the safety program 2064) stored in the storage 206, loads the programs into the main memory 204, and executes the programs, thereby realizing control according to the control target and various processes as will be described below.

The main memory 204 includes, for example, a volatile storage device such as a DRAM or an SRAM. The storage 206 includes, for example, a non-volatile storage device such as an HDD or an SSD.

The storage 206 stores the communication processing program 2062 for establishing and maintaining a connection for exchanging data frames with other safety control units 200 and/or safety IO units 300, the safety program 2064 created according to the target safety IO unit 300, the variable management program 2066 for realizing the variable management unit 260 (FIG. 3), and an attribute management program 2068 for realizing the attribute management unit 270 (FIG. 3), in addition to the system program 2060 for realizing basic functions.

A configuration example in which necessary functions are provided by the processor 202 executing a program is illustrated in FIG. 5, but some or all of the provided functions may be implemented using a dedicated hardware circuit (for example, an ASIC or an FPGA).

### (b3: Safety IO unit 300)

FIG. 6 is a schematic diagram illustrating a hardware configuration example of the safety IO unit 300 constituting the control device 2 according to the present embodiment. Referring to FIG. 6, the safety IO unit 300 includes a processor 302, a system memory 306, a safety IO module 308, and a local bus controller 320. These components are connected via a processor bus 330.

The local bus controller 320 functions as a communication slave and provides the same communication interface as that of other local units. The local bus controller 320 includes a slave controller 322, a buffer memory 324, transmission circuits (TX) 325 and 326, and reception circuits (RX) 327 and 328. Because a basic configuration of the local bus controller 320 is the same as that of the local bus controller 220 illustrated in FIG. 5, detailed description thereof will not be repeated.

The processor 302 corresponds to a computation processing unit that executes various processes in the safety IO unit 300. The system memory 306 includes a flash memory, a non-volatile RAM (NVRAM), or the like, and stores various settings and firmware necessary for the processes in the safety IO unit 300.

The safety IO module 308 performs a process of inputting a signal from the field and/or a process of outputting a signal to the field according to a function of the safety IO unit 300. The safety IO module 308 further has a safety control-specific function such as disconnection detection or feedback detection.

A configuration example in which necessary functions are provided by using the processor 302 is illustrated in FIG. 6, but some or all of the provided functions may be implemented using a dedicated hardware circuit (for example, an ASIC or an FPGA).

### (b4: Communication coupler unit 400)

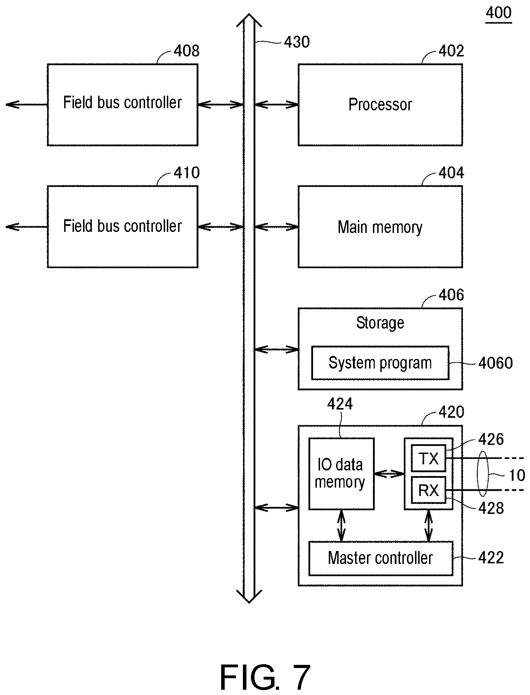

FIG. 7 is a schematic diagram illustrating a hardware configuration example of the communication coupler unit 400 constituting the control device 2 according to the present embodiment. Referring to FIG. 7, the communication coupler unit 400 includes a processor 402, a main memory 404, a storage 406, network controllers 408 and 410, a fieldbus controller 412, and a local bus controller 420. These components are connected via a processor bus 430.

The processor 402 corresponds to a computation processing unit that executes control computation or the like, and includes a CPU, a GPU, or the like. Specifically, the processor 402 reads the system program 4060 stored in the storage 406, loads the system program 4060 into the main memory 404, and executes the system program 4060, thereby realizing various processes for mediating the exchange of the IO data between a local unit (the safety IO unit 300 or the like) connected via the local bus 10 and the standard control unit 100 and/or the safety control unit 200.

The main memory 404 includes, for example, a volatile storage device such as a DRAM or an SRAM. The storage 406 includes, for example, a non-volatile storage device such as an HDD or an SSD.

The storage 406 stores the system program 4060 for realizing a function for exchanging the IO data of the local unit.

The network controllers 408 and 410 exchange data frames with another control device, any device, and another information processing device via any industrial network. Although a configuration in which two network controllers 408 and 410 are included is illustrated in FIG. 7, a configuration in which a single network controller is included may be adopted.

The fieldbus controller 412 exchanges data frames with a remote device via any fieldbus. Although a configuration in which the single fieldbus controller 412 is included is illustrated in FIG. 7, a configuration in which a plurality of fieldbus controllers is included may be adopted.

The local bus controller 420 exchanges data frames with the safety control unit 200 or any safety IO unit 300 via the local bus 10. More specifically, the local bus controller 420 includes a master controller 422, an IO data memory 424, a transmission circuit (TX) 426, and a reception circuit (RX) 428.

The IO data memory 424 is a memory that temporarily stores IO data that is exchanged with any local unit via the local bus 10, and an address is defined in advance in association with each local unit. The transmission circuit 426 generates a communication frame including output data and sends the communication frame to the local bus 10. The reception circuit 428 receives the communication frame transferred on the local bus 10 and demodulates the communication frame into input data. The master controller 422 controls the IO data memory 424, the transmission circuit 426, and the reception circuit 428 according to the data transfer timing or the like on the local bus 10. The master controller 422 provides control of a communication master that manages data transfer or the like on the local bus 10.

A configuration example in which necessary functions are provided by the processor 402 executing a program is illustrated in FIG. 7, but some or all of the provided functions may be implemented using a dedicated hardware circuit (for example, an ASIC or an FPGA).

### <C. Data transfer>

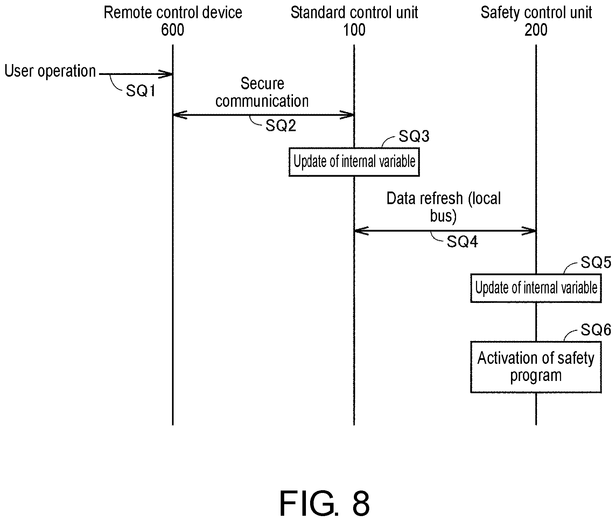

Next, data transfer in the safety control system 1 according to the present invention will be described. FIG. 8 is a sequence diagram illustrating data transfer in the safety control system 1 according to the present invention.

Referring to FIG. 8, when a user operation is performed with respect to the remote control device 600 (sequence SQ1), a value indicating the user operation is transmitted to the standard control unit 100 through secure communication between the remote control device 600 and standard control unit 100 (sequence SQ2).

The standard control unit 100 updates a corresponding internal variable with the value indicating the user operation from the remote control device 600 (sequence SQ3). In the local bus 10 between the standard control unit 100 and the safety control unit 200, data update (data refresh) is executed periodically, and the value of the internal variable in the safety control unit 200 is updated with the updated value of the internal variable in the standard control unit 100 (sequence SQ5). That is, the variable update is reflected between the standard control unit 100 and the safety control unit 200 via the local bus 10.

Further, in the safety control unit 200, the internal variable is updated such that an activation condition of the safety program 2064 is satisfied and the execution of the safety program 2064 is started (sequence SQ6). In the safety control unit 200, the safety program 2064 is cyclically executed.

As shown in the sequence of FIG. 8, security can be ensured in a transfer path to the safety control system 1 (the standard control unit 100 and the safety control unit 200) according to a user operation being performed with respect to the remote control device 600.

### <D. User interface for setting>

Next, an example of a user interface for setting provided in the safety control system 1 according to the present embodiment will be described. The setting in the present embodiment mainly includes a step of performing, for example, definition of variables and a setting of the attributes that can be used in the safety control unit 200, and a step of performing association of the variables defined in the safety control unit 200 with the variables defined in the standard control unit 100.

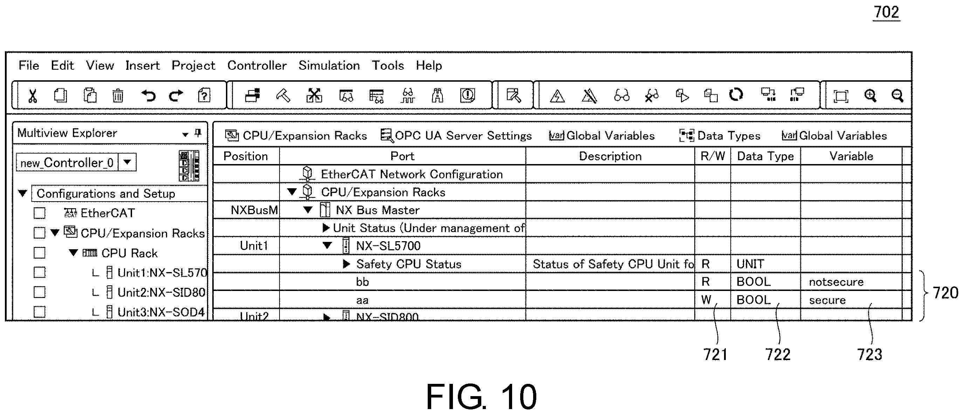

FIG. 9 illustrates a user interface screen 700 that defines variables that can be used in the safety control unit 200 according to the present embodiment. FIG. 10 illustrates a user interface screen 702 for defining variables that can be used in the standard control unit 100 according to the present embodiment.

The user interface screens illustrated in FIGs. 9 and 10 are provided in a support device that performs, for example, a program executed in the safety control system 1 and the setting. That is, the support device corresponds to an attribute setting receiving unit that receives a setting of one or a plurality of attributes for the variables that are managed by the safety control system 1.

The user interface screen 700 illustrated in FIG. 9 includes a variable setting 710. The variable setting 710 includes a variable name field 711 indicating a defined variable name. The user defines any variable that can be used in a user program (that is, the safety program 2064) that is executed by the safety control unit 200. In the example illustrated in FIG. 9, three variables "aa", "bb", and "cc" are defined.

The variable setting 710 includes a data type field 712 that defines a data type in association with each defined variable. The user defines a data type of each defined variable (a variable type). In the example illustrated in FIG. 9, the variables "aa" and "bb" are set to "Boolean constants", and the variable "cc" is set to a "safety Boolean constant". Here, the "Boolean constant" means a Boolean value managed in the standard control unit 100, and the "safety Boolean constant" means a Boolean value in which functional safety is guaranteed. Typically, the variable is associated with a state value acquired by any safety IO unit 300 or an output value output from any safety IO unit 300.

The variable setting 710 includes an initial value setting field 713 that defines an initial value in association with each defined variable. The user defines the initial value of each defined variable (a value immediately after the safety control unit 200 is activated). In FIG. 9, "FALSE" (that is, "0") is defined as an initial value for all variables.

The variable setting 710 includes a fixed value check box 714 for setting whether or not each defined variable has a fixed value. The user checks a corresponding check box when each defined variable is set to a fixed value. The example illustrated in FIG. 9 shows that none of the variables is included and the variables are periodically refreshed.

The variable setting 710 includes an exposure setting field 715 indicating whether or not each defined variable is exposed to the standard control unit 100 side. That is, the exposure setting field 715 receives a setting of validity/invalidity of an exposure attribute to the standard control unit 100 side, which is an example of the attribute of each variable. By the variables being exposed to the standard control unit 100 side, the variables can be shared between the safety control unit 200 and the standard control unit 100.

The user defines, among the defined variables, whether or not the variable is to be exposed to the standard control unit 100 side, and a type (input and output) of variable when the variable is exposed to the standard control unit 100 side. In the example illustrated in FIG. 9, it is defined that the variable "aa" is exposed as input data ("Input"), and the variable "bb" is exposed as output data ("Output"). Further, it is defined that the variable "cc" is not exposed ("Do not expose").

The variable setting 710 includes a secure setting field 716 indicating whether or not the secure setting is an input of a setting of validity/invalidity to each defined variable. That is, the secure setting field 716 receives the setting of validity/invalidity of secure attribute, which is an example of the attribute of each variable. The user checks which of the defined variables should be secured. In the example illustrated in FIG. 9, the secure setting is validated for the variable "aa".

The variable setting 710 includes an attribute setting field 717 for setting any attribute for each defined variable. That is, the attribute setting field 717 can receive a setting of any attribute or a setting of validity/invalidity for each variable.

Thus, in the user interface screen 700 illustrated in FIG. 9, a variable (for example, the variable "cc" illustrated in FIG. 9) indicating the safety IO data that is used in the safety control unit 200 and any variable (for example, the variables "aa" and "bb" illustrated in FIG. 9) that is used in the safety control unit 200 are defined.

Attributes of variables supplied between the standard control unit 100 and the safety control unit 200 are also defined. Examples of such attributes include whether or not each variable is exposed to the standard control unit 100 side, a secure attribute, and other attributes.

Thus, definitions of the variables supplied between the standard control unit 100 and the safety control unit 200 are referred to by the variable management unit 260 and the attribute management unit 270 (FIG. 3).

The user interface screen 702 illustrated in FIG. 10 receives the definitions of the variables available in the standard control unit 100. More specifically, the user interface screen 702 includes a variable setting 720. The variable setting 720 includes a setting for variables shared (that is, linked to each other) between the safety control unit 200 and the standard control unit 100.

The variable setting 720 includes a setting for the variables "aa" and "bb" that are set to be exposed in the user interface screen 700 illustrated in FIG. 9. That is, a variable set as input data (Input) or output data (Output) in the exposure setting field 715 of the user interface screen 700 illustrated in FIG. 9 becomes a candidate for variable assignment in the standard control unit 100.

The variable setting 720 includes an RW setting field 721 that defines Read (R)/Write (W) in association with each variable defined in the safety control unit 200. The user defines whether each defined variable is R (read-only) or W (editable). In the example illustrated in FIG. 10, W (editable) is set for the variable "aa" that is an input variable, and R (read only) is set for the variable "bb" that is an output variable.

The variable setting 720 includes a data type field 722 that defines a data type in association with each variable defined in the safety control unit 200. The user defines a data type (a variable type) of each defined variable. In the example illustrated in FIG. 10, the variables "aa" and "bb" are both set to a "Boolean constant".

The variable setting 720 includes a variable name field 723 that defines a variable name for reference in the standard control unit 100, in association with each variable defined in the safety control unit 200. The user determines a variable name for reference in the standard control unit 100 for each variable defined in the safety control unit 200. In the example illustrated in FIG. 10, a variable name "secure" is defined for the variable "aa", and a variable name "not secure" is defined for the variable "bb".

Through these settings, the variables defined in the safety control unit 200 are shared with the standard control unit 100. In this case, the attributes set for each variable in the safety control unit 200 are also reflected as they are.

Further, an access from an external device such as the remote control device 600 is permitted by validating an external exposure attribute for the variable "aa" ("secure" in the standard control unit 100). In this case, because the secure attribute is validated for the variable "aa", secure communication is used when the variable "secure" treated by the standard control unit 100 (corresponding to the variable "aa" in the safety control unit 200) is updated from the remote control device 600. That is, the external exposure management unit 160 of the standard control unit 100 uses the secure communication for exchange of a command for updating the value of the variable of which the security is set to validity.

Thus, the definitions of the variables that can be used in the standard control unit 100 are referred to by the external exposure management unit 160 and the attribute management unit 170 (FIG. 3).

In the safety control system 1 according to the present embodiment, an environment in which the user program executed by each of the standard control unit 100 and the safety control unit 200 and the setting can be performed by the same support device is provided. Thus, it is possible to comprehensively evaluate content set by the user interface screen as illustrated in FIGs. 9 and 10 described above.

For example, a variable for which the external exposure attribute is set in the standard control unit 100 may not be treated as a valid one unless the secure attribute is validated in a variable definition of the standard control unit 100 or the safety control unit 200. Specifically, setting transfer from the support device to the standard control unit 100 and/or the safety control unit 200 may be prohibited or a warning may be issued to the user unless the secure attribute is validated.

Thus, it is possible to evaluate, for example, consistency in both standard control and safety control by realizing the support device according to the present embodiment as an integrated management tool that integrally manages information used in the safety control system 1.

### <E. Modification example>

The configuration in which the standard control unit 100 and the safety control unit 200 are combined is mainly illustrated. In this case, characteristic processing as described above can be implemented.

### <G. Advantages>

A general safety control system is configured to activate safety control using, for example, an operation button connected to an input unit via a hard wire. From the viewpoint of improvement in maintainability, wire saving, noise that may be generated in a signal to be transferred, or the like, a method using data transfer is required instead of a configuration using such a hard wire.

Further, for example, when the safety control system is disposed in an environment (for example, high temperature, presence of toxic gas, or a clean room) that an operator cannot easily approach, a remotely operable configuration is required. Further, a remote operation may be required for the purpose of reducing the number of operators according to labor saving or improving productivity by a collective operation, for example.

When such a remote operation (output of an operation command through data transfer) is realized, ensuring security is also important. By ensuring such security, unauthorized access of a malicious third party is prevented.

According to the present embodiment, it is possible to give an activation command for the safety controller while securing security from a remote place without using, for example, an operation button connected to the input unit via the hard wire by adopting the configuration as described above.

It should be considered that the embodiment disclosed this time is an example in all respects and is not restrictive. The scope of the present invention is indicated by the claims rather than the above description, and is intended to include all modifications within meaning and scope equivalent to the claims.

### [Reference Signs List]

1 Safety control system
2 Control device
3 Remote IO device
4 Wide area network
10 Local bus
12 First connection
14 Second connection
16 Third connection
18 Data transfer path
100 Standard control unit
102, 202, 302, 402 Processor
104, 204, 404 Main memory
106, 206, 406 Storage
108, 110, 408, 410 Network controller
112, 412 Fieldbus controller
116 Memory card interface
118 Memory card
120, 220, 320, 420 Local bus controller
122, 422 Master controller
124, 424 IO data memory
126, 225, 226, 325, 326, 426 Transmission circuit (TX)
128, 227, 228, 327, 328, 428 Reception circuit (RX)
130, 230, 330, 430 Processor bus
150 Input and output data area
160 External exposure management unit
170, 270 Attribute management unit
200 Safety control unit
222, 322 Slave controller
224, 324 Buffer memory
260 Variable management unit
300 Safety IO unit
306 System memory
308 Safety IO module
400 Communication coupler unit
500 Robot
600 Remote control device
610, 700, 702 User interface screen
612 Situation display object
614 Display object
616 Message
618 Button object
710, 720 Variable setting
711, 723 Variable name field
712, 722 Data type field
713 Initial value setting field
714 Fixed value check box
715 Exposure setting field
716 Secure setting field
717 Attribute setting field
721 Setting field
1060, 2060, 4060 System program
1062 Standard control program
1064 Memory mapping information
1066 External exposure program
1068, 2068 Attribute management program
2062 Communication processing program
2064 Safety program
2066 Variable management program
LN1, LN2, LN3 wiring
SQ1, SQ2, SQ3, SQ5, SQ6 sequence

## Claims

1. A safety control system (1) for realizing functional safety, the safety control system (1) comprising:
a computation processing unit (202) configured to execute a safety program (2064); and
an access management unit (160) configured to receive a command for updating a value of one of stored variables through secure communication from an external device (600), and update the stored variable in response to an access from the external device (600), wherein the computation processing unit (202) is connected to the access management unit (160) via a local bus (10),
wherein the safety control system (1) comprises a standard control unit (100) responsible for standard control and a safety control unit (200) responsible for safety control, the computation processing unit (202) is provided in the safety control unit (200), and the access management unit (160) is provided in the standard control unit (100), wherein the update of the stored variables is reflected between the standard control unit (100) and the safety control unit (200) via the local bus (10), and the computation processing unit (202) is configured to start execution of the safety program (2064) when a specific variable among the stored variables is updated to a predefined value by the access management unit (160), wherein the predefined value is zero representing false, the safety control system (1) being **characterized in** further comprising:
an attribute setting receiving unit (700) configured to receive a setting of one or a plurality of attributes for the stored variables managed by the safety control system (1),
wherein the one or plurality of attributes includes a setting of validity/invalidity of security, wherein the access management unit (160) uses the secure communication for exchange of the command for updating a value of the variable of which the security is set to validity,
wherein when a user operation is performed with respect to the external device (600), a value indicating the user operation is transmitted to the standard control unit (100) through the secure communication between the external device (600) and the standard control unit (100);
the standard control unit (100) is configured to update a corresponding stored variable with the value indicating the user operation from the external device (600);
the standard control unit (100) and the safety control unit (200) are configured to periodically execute data refresh to update the value of the stored variable in the safety control unit (200) with an updated value of the stored variable in the standard control unit (100); and
when the stored variable in the safety control unit (200) is updated to the predefined value of the safety program, the safety control unit (200) is configured to start execution of the safety program .

2. A control method in a safety control system (1) according to claim 1, for realizing functional safety, the control method comprising:
receiving (SQ1), by the access management unit (160), a command for updating a variable value through secure communication from an external device (600);
updating (SQ3, SQ4, SQ5), by the access management unit (160), a stored variable in response to the command from the external device (600); and
starting (SQ6), by the computation processing unit (202), execution of a safety program (2064) when a specific variable is updated to a predefined value, wherein the predefined value is zero representing false, the control method being **characterized in** further comprising:
receiving, by the attribute setting receiving unit (700), a setting of one or a plurality of attributes for the stored variables managed by the safety control system (1),
wherein the one or plurality of attributes includes a setting of validity/invalidity of security, wherein the access management unit (160) uses secure communication for exchange of a command for updating a value of the variable of which the security is set to validity,
wherein when a user operation is performed with respect to the external device (600), a value indicating the user operation is transmitted to the standard control unit (100) through the secure communication between the external device (600) and the standard control unit (100);
updating, by the standard control unit (100), a corresponding stored variable with the value indicating the user operation from the external device (600);
periodically executing, by the standard control unit (100) and the safety control unit (200), data refresh to update the value of the stored variable in the safety control unit (200) with an updated value of the stored variable in the standard control unit (100); and
wherein when the stored variable in the safety control unit (200) is updated to the predefined value of the safety program, the safety control unit (200) starts execution of the safety program.

## Patentansprüche

1. Sicherheitssteuerungssystem (1) zur Gewährleistung funktionaler Sicherheit, wobei das Sicherheitssteuerungssystem (1) umfasst:
eine Rechenverarbeitungseinheit (202), die konfiguriert ist, um ein Sicherheitsprogramm (2064) auszuführen; und
eine Zugriffsverwaltungseinheit (160), die konfiguriert ist, um einen Befehl zum Aktualisieren eines Wertes einer der gespeicherten Variablen durch sichere Kommunikation von einer externen Vorrichtung (600) zu empfangen und die gespeicherte Variable als Reaktion auf einen Zugriff von der externen Vorrichtung (600) zu aktualisieren, wobei die Rechenverarbeitungseinheit (202) über einen lokalen Bus (10) mit der Zugriffsverwaltungseinheit (160) verbunden ist,
wobei das Sicherheitssteuersystem (1) eine Standardsteuereinheit (100), die für die Standardsteuerung zuständig ist, und eine Sicherheitssteuereinheit (200), die für die Sicherheitssteuerung zuständig ist, umfasst, die Rechenverarbeitungseinheit (202) in der Sicherheitssteuereinheit (200) bereitgestellt wird und die Zugriffsverwaltungseinheit (160) in der Standardsteuereinheit (100) bereitgestellt wird, wobei die Aktualisierung der gespeicherten Variablen zwischen der Standardsteuereinheit (100) und der Sicherheitssteuereinheit (200) über den lokalen Bus (10) widergegeben wird, und die Rechenverarbeitungseinheit (202) konfiguriert ist, um die Ausführung des Sicherheitsprogramms (2064) zu starten, wenn eine bestimmte Variable unter den gespeicherten Variablen durch die Zugriffsverwaltungseinheit (160) auf einen vordefinierten Wert aktualisiert wird, wobei der vordefinierte Wert Null ist, was falsch darstellt, wobei das Sicherheitssteuersystem (1) **dadurch gekennzeichnet ist, dass** es ferner umfasst:
eine Attributeinstellungs-Empfangseinheit (700), die konfiguriert ist, um eine Einstellung eines oder einer Vielzahl von Attributen für die gespeicherten Variablen zu empfangen, die von dem Sicherheitssteuerungssystem (1) verwaltet werden,
wobei das eine oder die Vielzahl von Attributen eine Einstellung der Gültigkeit/Ungültigkeit der Sicherheit enthalten, wobei die Zugriffsverwaltungseinheit (160) die sichere Kommunikation zum Austausch des Befehls zum Aktualisieren eines Wertes der Variablen verwendet, deren Sicherheit auf Gültigkeit eingestellt ist,
wobei, wenn eine Benutzerbedienung in Bezug auf die externe Vorrichtung (600) durchgeführt wird, ein Wert, der die Benutzerbedienung anzeigt, durch die sichere Kommunikation zwischen der externen Vorrichtung (600) und der Standardsteuereinheit (100) an die Standardsteuereinheit (100) übertragen wird;
die Standardsteuereinheit (100) konfiguriert ist, um eine entsprechende gespeicherte Variable mit dem Wert zu aktualisieren, der die Benutzerbedienung von der externen Vorrichtung (600) anzeigt;
die Standardsteuereinheit (100) und die Sicherheitssteuereinheit (200) konfiguriert sind, um regelmäßig eine Datenaktualisierung auszuführen, um den Wert der gespeicherten Variablen in der Sicherheitssteuereinheit (200) mit einem aktualisierten Wert der gespeicherten Variablen in der Standardsteuereinheit (100) zu aktualisieren; und
wenn die gespeicherte Variable in der Sicherheitssteuereinheit (200) auf den vordefinierten Wert des Sicherheitsprogramms aktualisiert wird, die Sicherheitssteuereinheit (200) konfiguriert ist, um die Ausführung des Sicherheitsprogramms zu starten.

2. Steuerverfahren in einem Sicherheitssteuersystem (1) gemäß Anspruch 1 zur Gewährleistung funktionaler Sicherheit, wobei das Steuerverfahren umfasst:
Empfangen (SQ1) eines Befehls zum Aktualisieren eines Variablenwerts durch die Zugriffsverwaltungseinheit (160) über eine sichere Kommunikation von einer externen Vorrichtung (600);
Aktualisieren (SQ3, SQ4, SQ5) einer gespeicherten Variablen durch die Zugriffsverwaltungseinheit (160) als Reaktion auf den Befehl von der externen Vorrichtung (600); und
Starten (SQ6) der Ausführung eines Sicherheitsprogramms (2064) durch die Rechenverarbeitungseinheit (202), wenn eine bestimmte Variable auf einen vordefinierten Wert aktualisiert wird, wobei der vordefinierte Wert Null ist, was falsch darstellt, wobei das Steuerverfahren **dadurch gekennzeichnet ist, dass** es ferner umfasst:
Empfangen einer Einstellung eines oder einer Vielzahl von Attributen für die gespeicherten Variablen, die durch das Sicherheitssteuerungssystem (1) verwaltet werden, durch die Attributeinstellungs-Empfangseinheit (700),
wobei das eine oder die Vielzahl von Attributen eine Einstellung der Gültigkeit/Ungültigkeit der Sicherheit enthält, wobei die Zugriffsverwaltungseinheit (160) eine sichere Kommunikation zum Austausch eines Befehls zum Aktualisieren eines Wertes der Variablen verwendet, deren Sicherheit auf Gültigkeit eingestellt ist,
wobei, wenn eine Benutzerbedienung in Bezug auf die externe Vorrichtung (600) durchgeführt wird, ein Wert, der die Benutzerbedienung anzeigt, durch die sichere Kommunikation zwischen der externen Vorrichtung (600) und der Standardsteuereinheit (100) an die Standardsteuereinheit (100) übertragen wird;
Aktualisieren einer entsprechenden gespeicherten Variablen durch die Standardsteuereinheit (100) mit dem Wert, der die Benutzerbedienung von der externen Vorrichtung (600) anzeigt;
periodisches Ausführen einer Datenaktualisierung durch die Standard-Steuereinheit (100) und die Sicherheits-Steuereinheit (200), um den Wert der gespeicherten Variablen in der Sicherheitssteuereinheit (200) mit einem aktualisierten Wert der gespeicherten Variablen in der Standardsteuereinheit (100) zu aktualisieren; und
wobei, wenn die gespeicherte Variable in der Sicherheitssteuereinheit (200) auf den vordefinierten Wert des Sicherheitsprogramms aktualisiert wird, die Sicherheitssteuereinheit (200) mit der Ausführung des Sicherheitsprogramms beginnt.

## Revendications

1. Système de commande de sécurité (1) pour réaliser une sécurité fonctionnelle, le système de commande de sécurité (1) comprenant :
une unité de traitement de calcul (202) configurée pour exécuter un programme de sécurité (2064) ; et
une unité de gestion d'accès (160) configurée pour recevoir une instruction pour mettre à jour une valeur de l'une de variables stockées par l'intermédiaire d'une communication sécurisée depuis un dispositif externe (600), et mettre à jour la variable stockée en réponse à un accès depuis le dispositif externe (600), dans lequel l'unité de traitement de calcul (202) est connectée à l'unité de gestion d'accès (160) via un bus local (10),
dans lequel le système de commande de sécurité (1) comprend une unité de commande standard (100) responsable d'une commande standard et une unité de commande de sécurité (200) responsable d'une commande de sécurité, l'unité de traitement de calcul (202) est prévue dans l'unité de commande de sécurité (200), et l'unité de gestion d'accès (160) est prévue dans l'unité de commande standard (100), dans lequel la mise à jour des variables stockées est reflétée entre l'unité de commande standard (100) et l'unité de commande de sécurité (200) via le bus local (10), et l'unité de traitement de calcul (202) est configurée pour démarrer une exécution du programme de sécurité (2064) lorsqu'une variable spécifique parmi les variables stockées est mise à jour à une valeur prédéfinie par l'unité de gestion d'accès (160), dans lequel la valeur prédéfinie est zéro représentant faux, le système de commande de sécurité (1) étant **caractérisé en ce qu'**il comprend en outre :
une unité de réception de réglage d'attribut (700) configurée pour recevoir un réglage d'un ou plusieurs attributs pour les variables stockées gérées par le système de commande de sécurité (1),
dans lequel les un ou plusieurs attributs comprennent un réglage de validité/invalidité de sécurité, dans lequel l'unité de gestion d'accès (160) utilise la communication sécurisée pour l'échange de l'instruction de mise à jour d'une valeur de la variable dont la sécurité est réglée à validité,
dans lequel, lorsqu'une opération d'utilisateur est effectuée en ce qui concerne le dispositif externe (600), une valeur indiquant l'opération d'utilisateur est transmise à l'unité de commande standard (100) par l'intermédiaire de la communication sécurisée entre le dispositif externe (600) et l'unité de commande standard (100) ;
l'unité de commande standard (100) est configurée pour mettre à jour une variable stockée correspondante avec la valeur indiquant l'opération d'utilisateur émanant du dispositif externe (600) ;
l'unité de commande standard (100) et l'unité de commande de sécurité (200) sont configurées pour exécuter périodiquement une actualisation de données pour mettre à jour la valeur de la variable stockée dans l'unité de commande de sécurité (200) avec une valeur mise à jour de la variable stockée dans l'unité de commande standard (100) ; et
lorsque la variable stockée dans l'unité de commande de sécurité (200) est mise à jour à la valeur prédéfinie du programme de sécurité, l'unité de commande de sécurité (200) est configurée pour démarrer une exécution du programme de sécurité.

2. Procédé de commande dans un système de commande de sécurité (1) selon la revendication 1, pour réaliser une sécurité fonctionnelle, le procédé de commande comprenant :
la réception (SQ1), par l'unité de gestion d'accès (160), d'une instruction pour mettre à jour une valeur de variable par l'intermédiaire d'une communication sécurisée depuis un dispositif externe (600) ;
la mise à jour (SQ3, SQ4, SQ5), par l'unité de gestion d'accès (160), d'une variable stockée en réponse à l'instruction émanant du dispositif externe (600) ; et
le démarrage (SQ6), par l'unité de traitement de calcul (202), d'une exécution d'un programme de sécurité (2064) lorsqu'une variable spécifique est mise à jour à une valeur prédéfinie, dans lequel la valeur prédéfinie est zéro représentant faux, le procédé de commande étant **caractérisé en ce qu'**il comprend en outre :
la réception, par l'unité de réception de réglage d'attribut (700), d'un réglage d'un ou plusieurs attributs pour les variables stockées gérées par le système de commande de sécurité (1),
dans lequel les un ou plusieurs attributs comprennent un réglage de validité/invalidité de sécurité, dans lequel l'unité de gestion d'accès (160) utilise la communication sécurisée pour l'échange d'une instruction de mise à jour d'une valeur de la variable dont la sécurité est réglée à validité,
dans lequel, lorsqu'une opération d'utilisateur est effectuée en ce qui concerne le dispositif externe (600), une valeur indiquant l'opération d'utilisateur est transmise à l'unité de commande standard (100) par l'intermédiaire de la communication sécurisée entre le dispositif externe (600) et l'unité de commande standard (100) ;
la mise à jour, par l'unité de commande standard (100), d'une variable stockée correspondante avec la valeur indiquant l'opération d'utilisateur émanant du dispositif externe (600) ;
l'exécution périodique, par l'unité de commande standard (100) et l'unité de commande de sécurité (200), d'une actualisation de données pour mettre à jour la valeur de la variable stockée dans l'unité de commande de sécurité (200) avec une valeur mise à jour de la variable stockée dans l'unité de commande standard (100) ; et
dans lequel, lorsque la variable stockée dans l'unité de commande de sécurité (200) est mise à jour à la valeur prédéfinie du programme de sécurité, l'unité de commande de sécurité (200) démarre une exécution du programme de sécurité.
